(19) Europäisches Patentamt
European Patent Office
Office européen des brevets

(11) **EP 4 418 347 A1**

(12) **EUROPEAN PATENT APPLICATION**

(43) Date of publication:
**21.08.2024 Bulletin 2024/34**

(21) Application number: **24156959.9**

(22) Date of filing: **09.02.2024**

(51) International Patent Classification (IPC):
$H01M\ 4/133^{(2010.01)}$    $H01M\ 4/134^{(2010.01)}$
$H01M\ 4/36^{(2006.01)}$    $H01M\ 4/38^{(2006.01)}$
$H01M\ 4/587^{(2010.01)}$    $H01M\ 4/62^{(2006.01)}$
$H01M\ 10/0525^{(2010.01)}$

(52) Cooperative Patent Classification (CPC):
H01M 4/134; H01M 4/133; H01M 4/364;
H01M 4/366; H01M 4/386; H01M 4/587;
H01M 4/625; H01M 10/0525; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.02.2023 KR 20230018005**

(71) Applicants:
• **SK On Co., Ltd.**
  **Seoul 03161 (KR)**
• **SK Innovation Co., Ltd.**
  **Seoul 03188 (KR)**

(72) Inventors:
• **KIM, Hyo Mi**
  **34124 Daejeon (KR)**
• **KWON, Seong Cho**
  **34124 Daejeon (KR)**
• **KIM, Moon Sung**
  **34124 Daejeon (KR)**

• **RYU, Sang Baek**
  **34124 Daejeon (KR)**
• **PARK, Da Hye**
  **34124 Daejeon (KR)**
• **PARK, Sang Won**
  **34124 Daejeon (KR)**
• **BANG, Sang In**
  **34124 Daejeon (KR)**
• **YOOK, Seung Hyun**
  **34124 Daejeon (KR)**
• **LEE, Hyun Ji**
  **34124 Daejeon (KR)**
• **JANG, Hwan Ho**
  **34124 Daejeon (KR)**
• **CHUNG, Da Bin**
  **34124 Daejeon (KR)**
• **HAN, Jun Hee**
  **34124 Daejeon (KR)**

(74) Representative: **Stolmár & Partner**
**Patentanwälte PartG mbB**
**Blumenstraße 17**
**80331 München (DE)**

(54) **ANODE FOR SECONDARY BATTERY AND LITHIUM SECONDARY BATTERY INCLUDING THE SAME**

(57)    An anode for a secondary battery includes an anode current collector, a first anode mixture layer on at least one surface of the anode current collector, and a second anode mixture layer on the first anode mixture layer. The first anode mixture layer includes a first silicon-based active material having a carbon coating layer formed on a surface, and a first conductive material, the second anode mixture layer includes a second silicon-based active material doped with a metal, and a second conductive material, and the anode for a secondary battery exhibits a Radial Breathing Mode (RBM) peak in a Raman spectrum obtained from a surface of the second anode mixture layer. An influence of volume expansion/contraction of a silicon-based active material during battery charging/discharging may be alleviated.

FIG. 1

**Description**

**BACKGROUND**

**1. FIELD**

The technology and implementations disclosed in this patent document generally relates to an anode for a secondary battery and a lithium secondary battery including the same.

**2. DESCRIPTION OF THE RELATED ART**

Recently, much research has been being undertaken on electric vehicles (EVs) that may replace vehicles using fossil fuels such as gasoline and diesel vehicles and the like, one of main causes of air pollution. Lithium secondary batteries with high discharge voltage and output stability are mainly used as a power source for such electric vehicles (EVs). Accordingly, the need for lithium secondary batteries with high energy density is increasing, and to this end, development and research into high-capacity anodes are also being actively undertaken.

**SUMMARY**

The disclosed technology may be implemented in some embodiments to reduce volume expansion/contraction of a silicon-based active material when charging/discharging a battery.

The disclosed technology may be implemented in some embodiments to alleviate a phenomenon of cracks occurring in an active material.

The disclosed technology may be implemented in some embodiments to provide an anode for a secondary battery with excellent lifespan characteristics in a high temperature environment.

The disclosed technology may be implemented in some embodiments to provide an anode for a high-capacity secondary battery with excellent rapid charging characteristics.

In some embodiments of the disclosed technology, an anode for a secondary battery includes an anode current collector; a first anode mixture layer on at least one surface of the anode current collector; and a second anode mixture layer on the first anode mixture layer. The first anode mixture layer includes a first silicon-based active material having a carbon coating layer formed on a surface, and a first conductive material, the second anode mixture layer includes a second silicon-based active material doped with a metal, and a second conductive material, and the anode for a secondary battery exhibits a Radial Breathing Mode (RBM) peak in a Raman spectrum obtained from a surface of the second anode mixture layer.

The anode for the secondary battery may exhibit G-band splitting in the Raman spectrum obtained from the surface of the second anode mixture layer.

The metal may be at least one selected from lithium (Li), magnesium (Mg), calcium (Ca), iron (Fe), titanium (Ti), vanadium (V), or aluminum (Al).

A content of the first silicon-based active material included in the first anode mixture layer may be less than or equal to a content of the second silicon-based active material included in the second anode mixture layer.

The content of the first silicon-based active material included in the first anode mixture layer may be 0.1 to 5% by weight.

The content of the second silicon-based active material included in the second anode mixture layer may be 5 to 30% by weight.

The first conductive material may be any one selected from artificial graphite, natural graphite, graphene, carbon black, Super P, hard carbon, and combinations thereof.

The second conductive material may be any one selected from multi-walled carbon nanotubes (MWCNT), single-walled carbon nanotubes (SWCNT), thin-walled carbon nanotubes (TWCNT), and combinations thereof.

A particle size (D50) of the first conductive material may be 1 to 10 um.

A length of the second conductive material may be 5 to 100 um.

A content of the first conductive material included in the first anode mixture layer may be greater than or equal to a content of the second conductive material included in the second anode mixture layer.

The content of the first conductive material included in the first anode mixture layer may be 0.3 to 5% by weight.

The content of the second conductive material included in the second anode mixture layer may be 0.01 to 0.3% by weight.

In some embodiments of the disclosed technology, a lithium secondary battery includes the anode for a secondary battery according to any one of the above-described embodiments.

## BRIEF DESCRIPTION OF DRAWINGS

Certain aspects, features, and advantages of the disclosed technology are illustrated by the following detailed description with reference to the accompanying drawings.

FIG. 1 is a schematic cross-sectional view illustrating a structure of an anode for a secondary battery according to an embodiment.

FIGS. 2A and 2B are diagrams illustrating results of Raman spectroscopy analysis of a first conductive material (FIG. 2A) and a second conductive material (FIG. 2B) included in an anode for a secondary battery according to an embodiment, respectively.

FIG. 3A is a diagram illustrating results of Raman spectroscopy analysis of an anode for a secondary battery according to Reference Example 1.

FIG. 3B is an enlarged view of a G-band portion in FIG. 3A.

FIG. 3C is an enlarged view of an RBM peak portion in FIG. 3A.

FIG. 4 is a diagram illustrating results of Raman spectroscopy analysis of an anode for a secondary battery according to Reference Example 2.

## DETAILED DESCRIPTION

Features of the disclosed technology disclosed in this patent document are described by example embodiments with reference to the accompanying drawings.

Hereinafter, various implementation examples according to the disclosed technology will be described, but the embodiments may be modified into various other forms, and the scope is not limited to the implementation examples described below.

The disclosed technology may be implemented in some embodiments to provide an anode for a secondary battery including a silicon-based active material with a higher discharge capacity than graphite to implement a secondary battery having high capacity and high energy density. When applying a silicon-based active material with a relatively high discharge capacity as an active material of an anode for a secondary battery, the loading weight (LW) of the anode active material layer may also be lowered, thereby further increasing energy density.

However, when the anode for a secondary battery contains a silicon-based active material, there may be a problem in which, (1) resistance increases due to side reactions with electrolyte, or (2) the volumetric contraction/expansion rate of the silicon-based active material is relatively high when charging/discharging a battery, thereby resulting in a short circuit inside the battery or cracks occurring in the active material. Accordingly, it may be difficult to secure the lifespan characteristics, fast charging performance and the like of the anode containing the silicon-based active material at an excellent level.

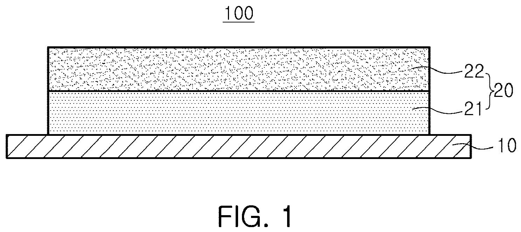

According to an embodiment of the present disclosure, an anode for a secondary battery with excellent performance may be provided by alleviating the above-mentioned problems. With reference to FIGS. 1 to 4, implementation examples of the present disclosure are described in detail below.

FIG. 1 is a schematic cross-sectional view illustrating the structure of an anode for a secondary battery according to an embodiment.

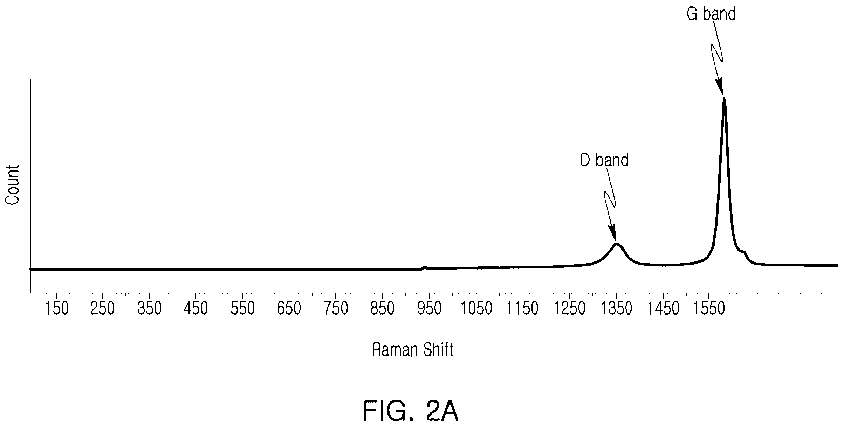

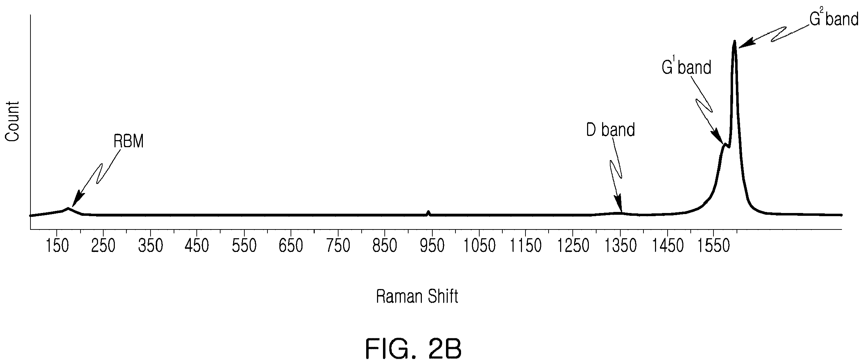

FIGS. 2A and 2B are diagrams illustrating the results of Raman spectroscopy analysis of a first conductive material (FIG. 2A) and a second conductive material (FIG. 2B) included in an anode for a secondary battery according to an embodiment, respectively.

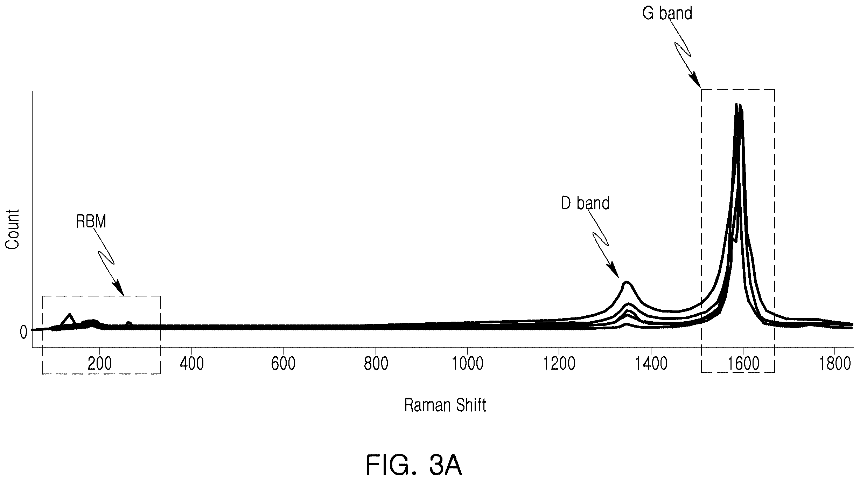

FIG. 3A is a diagram illustrating the results of Raman spectroscopy analysis of an anode for a secondary battery according to Reference Example 1.

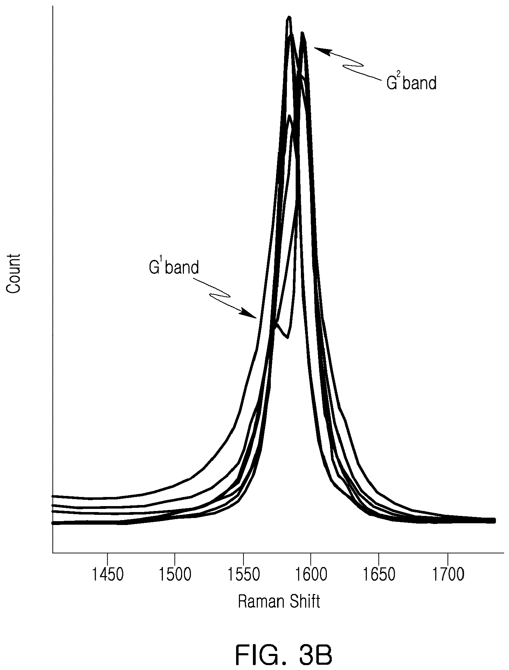

FIG. 3B is an enlarged view of a G-band portion in FIG. 3A.

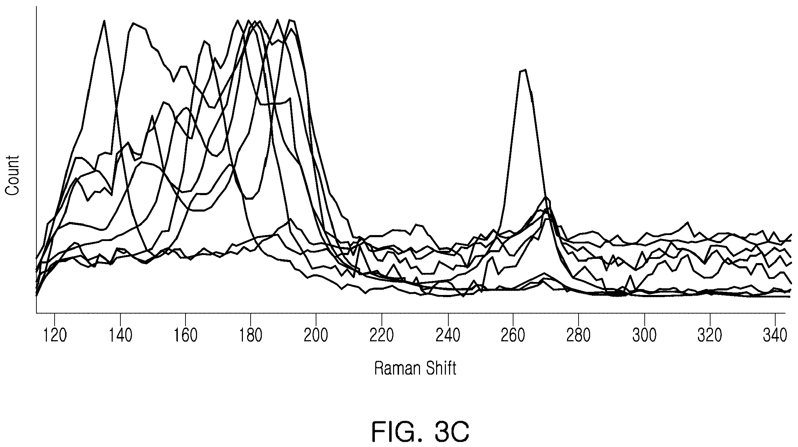

FIG. 3C is an enlarged view of a Radial Breathing Mode (RBM) peak portion in FIG. 3A.

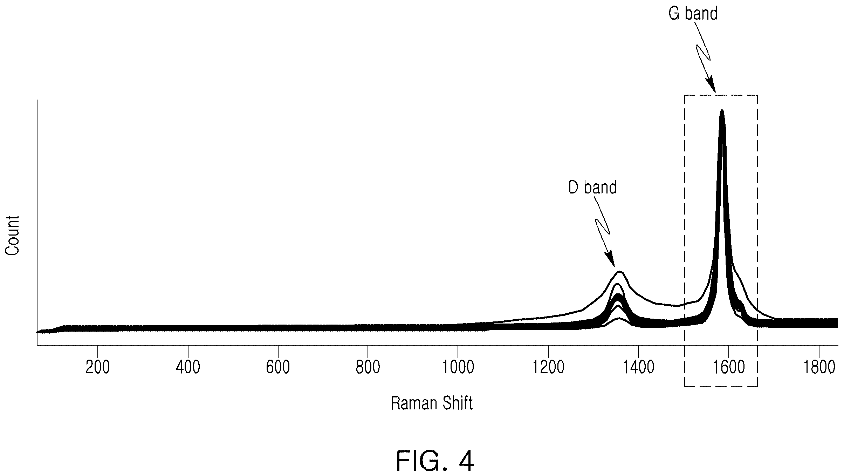

FIG. 4 is a diagram illustrating the results of Raman spectroscopy analysis of an anode for a secondary battery according to Reference Example 2.

## Anode for Secondary Battery

An anode 100 for a secondary battery according to an embodiment includes an anode current collector 10, a first anode mixture layer 21 on at least one surface of the anode current collector, and a second anode mixture layer 22 on the first anode mixture layer. The first anode mixture layer includes a first silicon-based active material having a carbon coating layer formed on the surface, and a first conductive material. The second anode mixture layer includes a second silicon-based active material doped with a metal, and a second conductive material. The anode for a secondary battery exhibits a radial breathing mode (RBM) peak in a Raman spectrum obtained from a surface of the second anode mixture layer.

The anode 100 for a secondary battery includes an anode mixture layer 20 on at least one surface of the anode current collector 10, and the anode mixture layer has a multi-layer structure and includes a first anode mixture layer 21 and a second anode mixture layer 22 (see FIG. 1). In this case, the first anode mixture layer 21 is a mixture layer (lower layer) on one surface adjacent to the anode current collector, and the second anode mixture layer 22 is a mixture layer (upper layer) disposed on the first anode mixture layer and relatively spaced from the anode current collector.

The anode current collector 10 may include a metal that has excellent conductivity and excellent adhesion to the anode slurry. Illustratively, as the anode current collector 10, one selected from the group consisting of copper foil, nickel foil, stainless steel foil, titanium foil, nickel foam, copper foam, polymer substrate coated with conductive metal, and combinations thereof may be appropriately used.

In the anode 100 for a secondary battery, the first anode mixture layer 21, a mixture layer adjacent to the anode current collector 10, includes a first silicon-based active material with a carbon coating layer formed on the surface. The carbon coating layer formed on the particle surface of the first silicon-based active material prevents the first silicon-based active material from contacting moisture in the atmosphere or the anode slurry, and may further improve the electrical conductivity of the active material. In addition, the first silicon-based active material with a carbon coating layer formed on the surface may have excellent structural stability in a high-temperature environment due to relatively small side reactions with the electrolyte solution. Therefore, when the first silicon-based active material is included in the first anode mixture layer 21 adjacent to the anode current collector 10, an anode for a secondary battery that has excellent conductivity and high-temperature lifespan characteristics may be provided.

The carbon coating layer contains a carbon element and may include a carbon-based precursor component used to form the coating layer. Illustratively, the carbon coating layer may include at least one selected from the group consisting of amorphous carbon, carbon nanotubes, carbon nanofibers, graphite, graphene, graphene oxide, and reduced graphene oxide.

The thickness of the carbon coating layer may be 5 to 30 nm. Additionally, the content of the carbon coating layer may be 1 to 10% by weight, or 2 to 5% by weight, based on the total weight of the first silicon-based active material. When the thickness and content of the carbon coating layer are within the above-mentioned range, the effect of introducing the carbon coating layer may be secured at an excellent level without deteriorating the characteristics of the silicon-based active material.

A method of forming a carbon coating layer on the surface of the first silicon-based active material is not particularly limited. Illustratively, a method of, for example, (1) thermally decomposing carbon-based precursors such as polymers and pitch containing carbon elements on the surface of the first silicon-based active material particles, or (2) simultaneously thermally decomposing and depositing the carbon precursor and the first silicon-based active material, or the like, may be used, but the disclosed technology is not limited thereto.

On the other hand, in the anode 100 for a secondary battery, the second anode mixture layer 22, a mixture layer formed on the first anode mixture layer 21 and spaced apart from the anode current collector 10, includes a second silicon-based active material doped with metal. The second silicon-based active material has micropores due to the metal doped on the second silicon-based active material, thereby reducing swelling of the anode when charging/discharging the battery, and thus the occurrence of cracks in the active material may be effectively alleviated by suppressing the change in volume of the second silicon-based active material. Therefore, when including the second silicon-based active material in the second anode mixture layer 22 adjacent to the electrolyte, an anode for a secondary battery that has excellent fast charging characteristics and room temperature lifespan characteristics may be provided.

The metal may be one or more metals selected from alkali metals, alkaline earth metals, transition metals, and other metals. Illustratively, the metal may be one or more metals selected from lithium (Li), magnesium (Mg), calcium (Ca), iron (Fe), titanium (Ti), vanadium (V), and aluminum (Al). According to an embodiment, the metal may be one or more metals including magnesium (Mg). The second silicon-based active material doped with the above-described type of metal may be illustratively expressed by chemical formulas such as $Li_2SiO_3$, $Li_2Si_2O_5$, $Li_4SiO_4$, $MgSiO$, $MgSiO_3$, or the like.

The content of the metal doped in the second silicon-based active material may be 3 to 20% by weight based on the total weight of the second silicon-based active material. For example, the content of the metal doped in the second silicon-based active material and distributed on the surface and/or inside the second silicon-based active material may be 5 to 17% by weight. When the content of metal doped in the second silicon-based active material is within the above-mentioned range, rapid charging characteristics and room temperature life characteristics may also be improved while securing high capacity characteristics through silicon-based active materials due to metal doping.

The content of metal hydroxide (for example, $Mg(OH)_2$) remaining on the surface of the second silicon-based active material may be less than 0.05% by weight based on the total weight of the second silicon-based active material. When the content of metal hydroxide remaining on the surface of the second silicon-based active material is within the above-mentioned range, a sufficient amount of metal may be doped into the second silicon-based active material, and side reactions on the surface of the second silicon-based active material may be suppressed.

When the metal doped in the second silicon-based active material includes magnesium (Mg), the Mg1s spectrum of the surface of the second silicon-based active material measured by X-ray photoelectron spectroscopy (XPS) may satisfy the following formula A.

[Formula A]

$$P_{Mg}/(P_{Mg}+P_{MgO}) \leq 0.6$$

In formula A, $P_{Mg}$ is the area of the 1303 eV peak of the Mg1s spectrum, and $P_{MgO}$ is the area of the 1304.5 eV peak of the Mg1s spectrum.

The $P_{Mg}$ may be the area of the peak (1303 eV) representing the magnesium element, and the $P_{MgO}$ may be the area of the peak (1304.5 eV) representing the combination of magnesium element and oxygen element. Therefore, the $P_{Mg}/(P_{Mg}+P_{MgO})$ value of the formula A may represent the ratio of magnesium metal among magnesium metal, magnesium oxide, and magnesium hydroxide present on the surface of the second silicon-based active material.

When the second silicon-based active material satisfies the conditions according to Formula A, magnesium remaining on the surface of the second silicon-based active material is converted into magnesium hydroxide to alleviate the occurrence of side reactions, thereby preventing deterioration of the lifespan characteristics of secondary batteries.

The method of doping the second silicon-based active material with the above-described types of metal is not particularly limited. Illustratively, the method of, for example, (1) mixing the second silicon-based active material and a metal precursor to form a mixture, (2) heating (firing) the mixture to a temperature of 1000 to 2000°C and then cooling the same to form a composite, and (3) grinding and classifying the composite to produce a metal-doped silicon-based active material, may be applied, but the disclosed technology is not limited thereto.

The first silicon-based active material and the second silicon-based active material may respectively include, as a silicon-based active material raw material before carbon coating or metal doping, at least one selected from Si, SiOx (0<x<2), an Si-Q alloy (where Q is an element selected from the group consisting of alkali metals, alkaline earth metals, Group 13 elements, Group 14 elements, Group 15 elements, Group 16 elements, transition metals, rare earth elements, and combinations thereof, but is not Si), and an Si-C composite. Illustratively, the first silicon-based active material and the second silicon-based active material may each include SiOx (0<x<2) as a silicon-based active material raw material before carbon coating or metal doping.

The content of the first silicon-based active material included in the first anode mixture layer may be less than or equal to the content of the second silicon-based active material included in the second anode mixture layer. In the anode 100 for a secondary battery, the content of the silicon-based active material (first silicon-based active material) contained in the first anode mixture layer 21 adjacent to the anode current collector 10 is controlled to be low, compared to the content of the silicon-based active material (second silicon-based active material) contained in the second anode mixture layer 22, thereby more effectively preventing anode peeling, short circuit phenomenon and the like due to volume change of silicon-based active material during battery charging/discharging and also maintaining the content of silicon-based active material in the entire anode to be appropriate level or more to secure capacity characteristics. Illustratively, the content of the first silicon-based active material included in the first anode mixture layer may be 0.1 to 5% by weight, and the content of the second silicon-based active material included in the second anode mixture layer may be 5 to 30% by weight. According to an embodiment, the content of the first silicon-based active material included in the first anode mixture layer may be 1 to 4% by weight, and the content of the second silicon-based active material included in the second anode mixture layer may be 10 to 20% by weight.

The total content of the silicon-based active material contained in the anode mixture layer 20 (for example, the total content of the first silicon-based active material and the second silicon-based active material based on the entire anode mixture layer) may be 0.1 to 20% by weight. For example, the content of the silicon-based active material included in the anode mixture layer 20 may be 1% by weight or more, 5% by weight or more, or 7% by weight or more, and may be 20 wt% or less, 15 wt% or less, or 13 wt% or less. When the total content of the silicon-based active material contained in the anode mixture layer 20 is within the above-mentioned range, in addition to securing the high capacity characteristics of the battery, the impact of changes in the volume of the silicon-based active material during battery charging/discharging may also be effectively alleviated.

In an embodiment, the first anode mixture layer 21 may include only a first silicon-based active material as a silicon-based active material, and the second anode mixture layer 22 may include only a second silicon-based active material as a silicon-based active material, but in another embodiment, the first anode mixture layer 21 and the second anode mixture layer 22 may include both the first silicon-based active material and the second silicon-based active material described above, respectively. At this time, the content of the first silicon-based active material in the first anode mixture layer 21 may be greater than or equal to the content of the second silicon-based active material, and the content of the second silicon-based active material in the second anode mixture layer 22 may be greater than or equal to the content of the first silicon-based active material.

The first anode mixture layer 21 and the second anode mixture layer 22 may each further include a carbon-based active material. The carbon-based active material may be one or more carbon-based materials selected from, for example, artificial graphite, natural graphite, hard carbon, soft carbon, carbon black, acetylene black, Ketjen black, Super P, graphene, and fibrous carbon. According to an embodiment, the carbon-based active material may be artificial graphite or natural graphite. When the first anode mixture layer 21 and the second anode mixture layer 22 each further include a carbon-based active material, the content of the carbon-based active material included in the first anode mixture layer 21 and the content of the carbon-based active material included in the second anode mixture layer 22, may be respectively, for example, 80 to 99% by weight, or 85 to 95% by weight.

The first anode mixture layer 21 and the second anode mixture layer 22 each further include a conductive material. In detail, the first anode mixture layer 21 includes a first conductive material, and the second anode mixture layer 22 includes a second conductive material. The conductive material is used to provide conductivity to the electrode and maintain the structure of the electrode and the like, and a conductive material having conductivity without causing side reactions with other elements of the secondary battery may be used. According to an embodiment, by applying different types of conductive materials to the upper and lower layers in the anode mixture layer of a multi-layer structure, an anode for a secondary battery with better capacity characteristics, lifespan characteristics, and the like, may be provided.

In this regard, the anode 100 for a secondary battery exhibits a Radial Breathing Mode (RBM) peak in the Raman spectrum obtained from the surface of the second anode mixture layer 22. At this time, the Radial Breathing Mode (RBM) peak may not appear in the Raman spectrum obtained from the surface of the first anode mixture layer 21. Additionally, the anode 100 for a secondary battery may exhibit G-band splitting in a Raman spectrum obtained from the surface of the second anode mixture layer 22. At this time, G-band splitting may not appear in the Raman spectrum obtained from the surface of the first anode mixture layer 21. Whether the RBM peak and G-band splitting appear during Raman spectroscopy analysis of the anode mixture layer may vary depending on the components included in the anode mixture layer, in detail, the type of conductive material.

The RBM peak is a peak that appears in the low wavenumber region of 100 to 500 $cm^{-1}$, in detail, 100 to 350 $cm^{-1}$ in the Raman spectrum, and the RBM peak may appear in various low wavenumber regions, such as 130 $cm^{-1}$, 150 $cm^{-1}$, 180 $cm^{-1}$, 190 $cm^{-1}$, 270 $cm^{-1}$, and the like. Whether the RBM peak appears may be determined by a ratio ($A_{RBM}/A_G$) between the area ($A_{RBM}$) of the RBM peak region and the area ($A_G$) of the G-band peak region. In detail, when the $A_{RBM}/A_G$ value is 0.03 to 0.06, it may be determined that the RBM peak appears, and when the $A_{RBM}/A_G$ value is 0.001 to 0.02, it may be determined that the RBM peak does not appear.

The area ($A_{RBM}$) of the RBM peak region and the area ($A_G$) of the G-band peak region may be calculated using the Resolutions Pro program. At this time, the area ($A_{RBM}$) of the RBM peak region may be derived from the baseline using the 2nd derivative method, and may be calculated by integrating the area derived by fitting the peaks corresponding to wave numbers of 106 $cm^{-1}$, 123 $cm^{-1}$, and 201 to 234 $cm^{-1}$ with a Gaussian curve. The area ($A_G$) of the G-band peak region may be calculated using the same method as described above for peaks corresponding to wavenumbers of 1215 $cm^{-1}$, 1565 $cm^{-1}$, and 1600 to 1745 $cm^{-1}$. At this time, Raman spectroscopic analysis may be performed under the following conditions: Wavelength: 532 nm, Magnification: 50 times, Grating resolution: 1800 mm/l, Laser power: 5%, and Number of scans: 10.

The G-band is a portion where a peak appears in the 1550 to 1625 $cm^{-1}$ absorption region during Raman spectroscopy analysis, and the G-band splitting indicates that the above-mentioned G-band appears as multiple or complex peaks due to two components. In detail, the G-band splitting may indicate that $G^1$-band with a peak in the absorption region of 1568 to 1586 $cm^{-1}$ during Raman spectroscopic analysis, and $G^2$-band with a peak in the absorption region of 1587 to 1595 $cm^{-1}$, both appear.

Raman spectroscopic analysis of the surface of the anode mixture layer may be performed on 10 or more points (example, 10 to 5000 points), and as the number of points increases, reliability may be judged to be higher. Additionally, in the case of an anode having a multilayer structure, during Raman spectroscopy analysis of the surface of the first anode mixture layer 21, the Raman spectroscopy analysis may be performed on a point included in a region adjacent to the anode current collector 10 (for example, a region ranging from 0.1 to 20% of the total thickness of the anode mixture layer from the anode current collector to the thickness of the anode mixture layer), and during Raman spectroscopy analysis of the surface of the second anode mixture layer 22, the Raman spectroscopy analysis may be performed on a point included in a region spaced apart from the anode current collector 10 (for example, a region ranging from 0.1 to 10% of the total thickness of the anode mixture layer in the thickness direction from the outermost surface of the anode mixture layer). At this time, Raman spectroscopic analysis may be performed under the following conditions: wavelength: 532 nm, magnification: 50 times, grating resolution: 1800 mm/l, laser power: 5%, and number of scans: 10.

Referring to FIGS. 2A and 2B, upon Raman spectroscopy analysis of the first conductive material (graphite-based conductive material) included in the anode for a secondary battery according to an embodiment, while neither the RBM peak nor the G-band splitting appears (see FIG. 2A), it can be seen that both the RBM peak and the G-band splitting appear during Raman spectroscopic analysis of the second conductive material (carbon nanotube; CNT) (see FIG. 2B). In addition, referring to FIGS. 3A to 3C, during Raman spectroscopy analysis of the anode containing the second conductive material, while both the RBM peak and G-band splitting appear (see FIGS. 3A to 3C), it can be confirmed that neither the RBM peak nor the G-band splitting appears during Raman spectroscopy analysis of the anode containing the first conductive material. (See FIG. 4).

As such, whether the RBM peak and G-band splitting appear during Raman spectroscopy analysis of the anode mixture layer may vary depending on the type of conductive material included in the anode mixture layer. When different types of conductive materials are applied to the upper and lower layers in a multilayer anode, whether RBM peaks and G-band splitting appear during Raman spectroscopic analysis of the surfaces of the upper and lower anode mixture layers may differ. Therefore, as described above, a Radial Breathing Mode (RBM) peak or the like appears in the Raman spectrum obtained from the surface of the second anode mixture layer 22, and when the Radial Breathing Mode (RBM) peak or the like does not appear in the Raman spectrum obtained from the surface of the first anode mixture layer 21, it may be determined that the first anode mixture layer 21 includes a first conductive material, and the second anode mixture layer 22 includes a second conductive material.

The first conductive material refers to a conductive material that has relatively low crystallinity, reactivity with the electrolyte solution, and small specific surface area, which may alleviate the occurrence of side reactions with the electrolyte solution. On the other hand, the second conductive material has relatively high crystallinity and excellent dispersibility and conductivity, and refers to a conductive material that forms a conductive path that may increase electrical contact between respective components to significantly reduce a phenomenon of electrical network disconnection and alleviate increases in resistance even if the volume of the silicon-based active material changes during battery charging/discharging.

Therefore, if the type of conductive material is appropriately applied differently for respective upper and lower layers in a multi-layer anode and in the case in which the observation of RBM peaks or the like for respective upper and lower layers is different, by including a conductive material with relatively low crystallinity in the first anode mixture layer (lower layer) adjacent to the current collector, an anode in which problems such as electrode detachment and the like due to volume expansion of the silicon-based active material are alleviated may be provided. In addition, a conductive material with high crystallinity and excellent conductivity and dispersibility is included in the second anode mixture layer (upper layer) to form and maintain a conductive path in the electrode layer, thereby providing an anode with further improved fast charging characteristics.

When the first conductive material and the second conductive material are analyzed by Raman spectroscopy, a D-band, a portion where a peak appears in an absorption region of 1330 to 1380 $cm^{-1}$, may be observed. In addition, the D-band may be observed in the Raman spectrum obtained from the surface of each of the first anode mixture layer 21 and the second anode mixture layer 22. Detailed descriptions of the Raman spectroscopic analysis, peak observation method, and the like are omitted as they overlap with the above-mentioned content.

The first conductive material may be any one selected from artificial graphite, natural graphite, graphene, carbon black, acetylene black, Ketjen black, Super P, hard carbon, and combinations thereof, and the second conductive material may be any one selected from multi-walled carbon nanotubes (MWCNT), single-walled carbon nanotubes (SWCNT), thin-walled carbon nanotubes (TWCNT), and combinations thereof.

In some embodiments, the first conductive material may be any one graphite-based conductive material selected from artificial graphite, natural graphite, and combinations thereof. When applying a graphite-based conductive material, which is a carbon-based active material and a negative electrode active material, as the first conductive material, not only may electrolyte consumption be reduced by mitigating side reactions with the electrolyte, but it may also contribute to further improving the capacity characteristics of the anode. In addition, when applying a CNT-based conductive material such as single-walled carbon nanotube (SWCNT) as the second conductive material, a conductive path that may increase electrical contact between components included in the anode mixture layer may be more easily formed, and the impact of changes in the volume of the silicon-based active material during battery charging/discharging may be significantly reduced and the increase in resistance may be further alleviated.

In some embodiments, a particle size (D50) of the first conductive material may be 1 to 10 um, and the length of the second conductive material may be 5 to 100 um. Illustratively, the particle size (D50) of the first conductive material may be 2 to 7 um. Additionally, a particle diameter (D50) of the second conductive material may be 1 to 15 nm. The particle size (D50) refers to the average particle size based on 50% of the particle size distribution, and may be measured and calculated by a particle size measuring device (e.g., Microtrac MT 3000) and method of the related art.

The content of the first conductive material included in the first anode mixture layer may be greater than or equal to the content of the second conductive material included in the second anode mixture layer. Illustratively, the content of the first conductive material included in the first anode mixture layer may be 0.3 to 5% by weight, and the content of the second conductive material included in the second anode mixture layer may be 0.01 to 0.3% by weight. According to an embodiment, the content of the first conductive material included in the first anode mixture layer may be 0.3 to 3% by weight, 0.35 to 1% by weight, or 0.4 to 0.6% by weight, and the content of the second conductive material included in the second anode mixture layer may be 0.05 to 0.15% by weight. When the contents of the first and second conductive materials are adjusted within the above-mentioned range, the content of the conductive material contained in the first anode mixture layer (lower layer) formed on one side adjacent to the current collector is adjusted to be relatively high, thereby increasing the contact point between the current collector and the first anode mixture layer. When the contact points are increased, the resistance between the electrode and the current collector may be reduced. Even if the electrode expands during use, the contact point between the current collector and the electrode may be maintained.

In addition, by adjusting the content of the second conductive material included in the second anode mixture layer (upper layer) to a relatively small level, economic efficiency may be secured by reducing the content of the conductive material included in the entire electrode. By increasing the content of the active material in the mixture layer, an electrode with the same energy density may be implemented with a relatively low loading weight. In addition, when an excessive amount of conductive material is included in the upper layer, the problem of deteriorating the interfacial resistance and lifespan characteristics of the electrode by blocking pores may be alleviated.

In an embodiment, although the first anode mixture layer 21 may include only the first conductive material as the conductive material, and the second anode mixture layer 22 may include only the second conductive material as the conductive material, in another embodiment, the first anode mixture layer 21 and the second anode mixture layer 22 may each include both the first conductive material and the second conductive material described above as conductive materials. At this time, the content of the first conductive material included in the first anode mixture layer may be greater than or equal to the content of the second conductive material, and the content of the second conductive material included in the second anode mixture layer may be greater than or equal to the content of the first conductive material.

The first anode mixture layer 21 and the second anode mixture layer 22 may each further include an additional conductive material. Illustratively, as the additional conductive material, metal powders or metal fibers such as copper, nickel, aluminum, and silver; conductive whiskers such as zinc oxide and potassium titanate; conductive metal oxides such as titanium oxide; or conductive polymers such as polyphenylene derivatives, and the like, may be applied as one type alone or as two or more types.

The first anode mixture layer 21 and the second anode mixture layer 22 may each further include a binder. The binder is not particularly limited as long as it is a compound that serves to well adhere the components in the anode mixture layer to each other and the anode mixture layer to the current collector. Illustratively, the binder may be a rubber-based binder such as styrene-butadiene rubber (SBR), fluorine-based rubber, ethylene propylene rubber, butadiene rubber, isoprene rubber, and silane-based rubber; a cellulose-based binder such as carboxymethylcellulose (CMC), hydroxypropylmethylcellulose, methylcellulose, or alkali metal salts thereof; and combinations thereof. In some embodiments, the first anode mixture layer and the second anode mixture layer may each include a rubber-based binder. Illustratively, the first anode mixture layer and the second anode mixture layer may each include a rubber-based binder and a cellulose-based binder.

When the first anode mixture layer 21 and the second anode mixture layer 22 each further include a binder, the content of the binder included in the first anode mixture layer 21 and the content of the binder included in the second anode mixture layer 22 may each be exemplarily 0.1 to 10% by weight.

In an embodiment, when the first anode mixture layer and the second anode mixture layer respectively further include a rubber-based binder, the content of the rubber-based binder included in the first anode mixture layer may be greater than or equal to the content of the rubber-based binder included in the second anode mixture layer. Illustratively, the content of the rubber-based binder included in the first anode mixture layer may be 1.0 to 3% by weight, and the content of the rubber-based binder included in the second anode mixture layer may be 0.1 to 1.0% by weight. In some embodiments, the content of the rubber-based binder included in the first anode mixture layer may be 1.5 to 2.5% by weight, and the content of the rubber-based binder included in the second anode mixture layer may be 0.4 to 0.8% by weight.

If the content of the rubber-based binder contained in the first anode mixture layer is too small, the adhesive strength of the first anode mixture layer adjacent to the current collector may decrease, which may cause problems such as scrap generation and mixture layer detachment during the notching process. On the other hand, if the content of the rubber-based binder throughout the anode is excessive, electrical resistance may increase and battery characteristics may deteriorate. Accordingly, when the content of the rubber-based binder included in the first anode mixture layer, as the lower layer, is adjusted to be relatively high compared to the content of the rubber-based binder included in the second anode mixture layer, as the upper layer, the occurrence of the above-mentioned problems may be alleviated while lowering the content of the rubber-based binder overall in the anode, and thus, increased electrical resistance may also be alleviated.

Therefore, when applying the content relationship of the rubber binder for each anode mixture layer as described above, since multilayer electrodes may have excellent flexibility, adhesion and the like, problems such as electrode detachment during the process or cracking or electrode detachment during the charging/discharging process may be alleviated, and low resistance characteristics may also be secured.

The loading weight (LW) ratio of the first anode mixture layer and the second anode mixture layer may be 2:8 to 8:2. Additionally, the loading weight of the first anode mixture layer may be 1.5 to 9.5 mg/cm$^2$, and the loading weight of the second anode mixture layer may be 1.5 to 9.5 mg/cm$^2$. The loading weight (LW) refers to the amount of the anode mixture layer formed on the current collector, for example, a layer containing an active material, a binder, a conductive material and the like, expressed in units of weight per area. At this time, the area is based on the area of the current collector, and the weight is based on the weight of the entire anode mixture layer formed. When the loading weight (LW) value, ratio, and the like of the first anode mixture layer and the second anode mixture layer are within the above-mentioned range, a multilayer anode with excellent capacity characteristics, lifespan characteristics, and fast charging characteristics may be provided.

The method of manufacturing the anode 100 for a secondary battery is not particularly limited. Illustratively, an anode slurry containing a first solvent, a first silicon-based active material, a first conductive material, and the like is applied on the anode current collector 10 by a method such as bar coating, casting, or spraying, and is dried at 70 to 100°C to form the first anode mixture layer 21, and an anode slurry containing a second solvent, a second silicon-based active material, a second conductive material, and the like is applied on the first anode mixture layer by a method such as bar coating, casting, or spraying, and is dried at 70 to 100°C, thereby manufacturing the anode 100 for a secondary battery in the manner of forming the second anode mixture layer 22.

The solvent may be, for example, dimethyl sulfoxide (DMSO), isopropyl alcohol, N-methylpyrrolidone (NMP), acetone, or water. The amount of solvent used is sufficient to dissolve or disperse the active material, conductive material, and binder in consideration of the application thickness and manufacturing yield of the composition for forming the anode mixture layer, and to have a viscosity that may exhibit excellent thickness uniformity when applied to form the anode mixture layer.

Lithium Secondary Battery

A lithium secondary battery according to an embodiment includes an anode for a secondary battery according to any one of the above-described embodiments. Illustratively, the lithium secondary battery may include an anode and a cathode for a secondary battery according to any one of the above-described embodiments, and optionally, may further or may not include a separator disposed between the cathode and the anode.

The cathode may include a cathode active material. The cathode active material is not particularly limited. Illustratively, the cathode may include lithium-transition metal complex oxide as a cathode active material. The lithium-transition metal complex oxide may be, illustratively, an NCM-based cathode active material represented by the formula $Li_xNi_aCo_bMn_cO_y$ ($0<x\leq1.1$, $2\leq y\leq2.02$, $0<a<1$, $0<b<1$, $0<c<1$, $0<a+b+c\leq1$), or a lithium ferrophosphate (LFP)-based cathode active material represented by the formula $LiFePO_4$.

The separator may include a porous polymer film formed of polyolefin-based polymers such as ethylene homopolymer, propylene homopolymer, ethylene/butene copolymer, ethylene/hexene copolymer, ethylene/methacrylate copolymer, or the like. Additionally, the separator may include a non-woven fabric formed of high melting point glass fiber, polyethylene terephthalate fiber, or the like.

The lithium secondary battery has excellent high capacity characteristics, lifespan characteristics, and fast charging characteristics, and the like, and thus, may be significantly useful as a power source for electric vehicles (EV).

Examples and Comparative Examples

1. Anode and Secondary Battery Manufacturing

1) Anode Manufacturing

(1) Reference Examples 1 to 2

To confirm the electrode Raman analysis results according to the type of conductive material, an anode mixture layer with a single-layer structure having the composition illustrated in Table 1 below was prepared, and Raman spectroscopic analysis was performed to confirm the $A_{RBM}/A_G$ value, whether RBM peak was observed, and whether G-band splitting was observed, and the results are illustrated in Table 1 below.

The area ($A_{RBM}$) of the RBM peak region and the area ($A_G$) of the G-band peak region were calculated using the Resolutions Pro program. At this time, the area ($A_{RBM}$) of the RBM peak region was calculated by deriving the baseline using the 2nd derivative method and then fitting the peaks corresponding to wavenumbers of 106 cm$^{-1}$, 123 cm$^{-1}$, and 201 to 234 cm$^{-1}$ with Gaussian curves and by integrating the derived area, and the area ($A_G$) of the G-band peak region was calculated using the same method as described above for peaks corresponding to wavenumbers of 1215 cm$^{-1}$, 1565 cm$^{-1}$, and 1600 to 1745 cm$^{-1}$. In addition, Raman spectroscopic analysis was conducted under the conditions of wavelength: 532 nm, magnification: 50 times, grating resolution: 1800 mm/l, laser power: 5%, and number of scans: 10.

On the other hand, as a conductive material, graphite-based conductive material illustrating neither RBM peak nor G-band splitting during Raman spectroscopic analysis (see FIG. 2A), and carbon nanotubes illustrating both RBM peak and G-band splitting during Raman spectroscopy (see FIG. 2B), were applied differently for respective reference examples.

[Table 1]

| | Silicon-based Active Material | | Conductive Material | | RBM Peak | | G-band Splitting Observation or Not |
|---|---|---|---|---|---|---|---|
| | Type | Content (wt%) | RBM Peak and G-band Splitting Observation or Not | Content (wt%) | $A_{RBM}/A_G$ | Observation or Not | |
| Reference Example 1 | B | 2 | O | 0.1 | 0.045 | O | O |
| Reference Example 2 | B | 2 | X | 3 | 0.001 | X | X |

B: Carbon coated SiOx

Referring to Table 1 above, during Raman spectroscopy analysis of the anode mixture layer (Reference Example 1) containing carbon nanotubes in which both the RBM peak and G-band splitting appear, it was confirmed that the RBM peak appears with an $A_{RBM}/A_G$ value of 0.045 and within the range of 0.03 to 0.06, and G-band splitting was observed (see FIG. 3A). On the other hand, in the case of an anode mixture layer containing a graphite-based conductive material (Reference Example 2) in which neither the RBM peak nor the G-band splitting appears, it was confirmed that the $A_{RBM}/A_G$ value was 0.001 and was within the range of 0.001 to 0.02, so that the RBM peak did not appear, and G-band splitting was also not observed.

Considering these results, it is believed that depending on the type of conductive material included in the anode mixture layer, whether the RBM peak and G-band splitting are observed in the Raman spectrum obtained from the surface of the anode mixture layer may differ.

(2) Examples 1 to 2 and Comparative Examples 1 to 4

A first anode slurry containing a carbon-based active material, a first silicon-based active material, a binder and a first conductive material, and a second anode slurry containing a carbon-based active material, a second silicon-based active material, a binder and a second conductive material, were prepared, respectively. Thereafter, the first anode slurry and the second anode slurry were simultaneously applied on the copper foil, a current collector, and then dried at 80° C, thereby manufacturing an anode for a secondary battery with a multilayer structure, including a first anode mixture layer on the current collector and a second anode mixture layer formed on the first anode mixture layer. The loading weight (LW) ratio of the first anode mixture layer and the second anode mixture layer was applied at 5:5.

At this time, as the first and second silicon-based active materials, a magnesium-doped silicon-based active material (Mg-doped $SiO_x$) and a silicon-based active material (carbon coated $SiO_x$) with a carbon coating layer were applied differently depending on the examples and comparative examples. As the first and second conductive materials, carbon nanotubes that illustrate neither RBM peak nor G-band splitting when analyzed by Raman spectroscopy (see FIG. 2A), and a graphite-based conductive material illustrating both RBM peak and G-band splitting during Raman spectroscopic analysis (see FIG. 2B) were applied differently depending on the Examples and Comparative Examples. The remaining artificial graphite was used as a carbon-based active material, and carboxymethylcellulose (CMC) and styrene-butadiene rubber (SBR) were applied as binders.

The contents of carboxymethyl cellulose (CMC) and styrene-butadiene rubber (SBR), which are binders included in the first anode mixture layer, were 1.2% by weight and 2.4% by weight, respectively. The contents of carboxymethyl cellulose (CMC) and styrene-butadiene rubber (SBR), which are binders included in the second anode mixture layer, were 1.2% by weight and 0.6% by weight, respectively. The contents of the first silicon-based active material and the first conductive material included in the first anode mixture layer, and the contents of the second silicon-based active material and the second conductive material contained in the second anode mixture layer, were applied as illustrated in Table 2 below, according to the examples and comparative examples.

[Table 2]

| | First Anode Mixture Layer (lower layer) | | | | Second Anode Mixture Layer (upper layer) | | | |
|---|---|---|---|---|---|---|---|---|
| | First Silicon-based Active Material | | First Conductive Material | | Second Silicon-based Active Material | | Second Conductive Material | |
| | Type | Content (wt%) | Content (wt%) | RBM peak and G-band Splitting Observation or Not | Type | Content (wt%) | Content (wt%) | RBM peak and G-band Splitting Observation or Not |
| Example 1 | B | 3 | 3 | X | A | 15 | 0.1 | ○ |
| Example 2 | B | 3 | 0.1 | ○ | A | 15 | 0.1 | ○ |
| Comparative Example 1 | A | 3 | 3 | X | B | 15 | 0.1 | ○ |
| Comparative Example 2 | A | 3 | 0.1 | ○ | B | 15 | 0.1 | ○ |
| Comparative Example 3 | B | 3 | 0.1 | ○ | A | 15 | 3 | X |
| Comparative Example 4 | B | 3 | 3 | ○ | A | 15 | 0.1 | X |
| A: Mg-doped SiOx <br> B: Carbon coated SiOx | | | | | | | | |

2) Secondary Battery Manufacturing

A cathode was manufactured by applying and drying a slurry containing an NCM-based active material, a lithium-transition metal complex oxide, on aluminum foil, and by placing the secondary battery cell manufactured by interposing a polyolefin separator between the cathode and the anode prepared above into a secondary battery pouch, and then injecting an electrolyte solution containing $LiPF_6$ of 1M dissolved in a solvent mixed with ethylene carbonate (EC) and diethyl carbonate (DEC) into the secondary battery pouch and sealing the same, a pouch-type lithium secondary battery was manufactured. The prepared pouch-type lithium secondary battery was applied as a secondary battery sample for Examples and Comparative Examples.

2. Evaluation of Secondary Battery

1) Room Temperature (25°C) Capacity Retention Rate

For the secondary battery manufactured as described above, lifespan characteristics evaluation in the DOD 94% (SOC 4-98%) range was conducted in a chamber maintained at 25°C. It was charged at 0.3C to the voltage corresponding to SOC 98% under constant current/constant voltage (CC/CV) conditions, and then cut off at 0.05C. Afterwards, it was discharged at 0.3C to the voltage corresponding to SOC 4% under constant current (CC) conditions, and the discharge capacity was measured. After repeating this process for 500 cycles, the discharge capacity retention rate compared to the initial discharge capacity was measured as a percentage(%), and the capacity retention rate when evaluating room temperature life characteristics was measured, and the results are illustrated in Table 3 below.

2) High Temperature (45°C) Capacity Retention Rate

For the secondary battery manufactured as described above, the capacity retention rate during high-temperature lifespan characteristic evaluation was measured in a chamber maintained at 45°C by the same method as the room temperature (25°C) lifespan characteristic evaluation, and the results are illustrated in Table 3 below.

3) Fast Charging Capacity Retention Rate

The secondary battery manufactured as described above was charged to reach DOD 72% within 35 minutes according to the step charging method (C-rate: 2.5C/2.25C/2.0C/1.75C/1.5C/1.25C/1.0C/0.75C/0.5C), and then discharged to 1/3C. The charge/discharge is performed as 1 cycle, and 300 cycles were repeated with a waiting time of 10 minutes between charge/discharge cycles, and then, the discharge capacity retention rate compared to the initial discharge capacity was measured by a percentage to measure the rapid charge capacity retention rate, and the results are illustrated in Table 3 below.

[Table 3]

|  | Room Temperature Capacity Retention Rate (%) | High Temperature Capacity Retention Rate (%) | Fast Charging Capacity Retention Rate (%) |
|---|---|---|---|
| Example 1 | 95.6 | 88.8 | 97.9 |
| Example 2 | 95.1 | 88.5 | 97.5 |
| Comparative Example 1 | 93.3 | 88.1 | 92.5 |
| Comparative Example 2 | 93.4 | 88.0 | 92.3 |
| Comparative Example 3 | 83.7 | 80.9 | 79.8 |
| Comparative Example 4 | 72.2 | - (Ends at 400 cycle) | 70.8 |

Referring to Tables 2 and 3 above, in Examples 1 and 2, as the second anode mixture layer includes a Mg-doped silicon-based active material with excellent lifespan characteristics, and the first anode mixture layer includes a silicon-based active material with a carbon coating layer having excellent high-temperature characteristics, it was found that both room temperature and high temperature lifespan and fast charging characteristics were excellent. Additionally, when comparing Example 1 and Example 2, in Example 1, the content of the first conductive material included in the first anode mixture layer is high, so that a sufficient conductive path is formed even when the first conductive material not exhibiting RBM peaks and G-band splitting is used. In Example 2, since the content of the first conductive material contained in the first anode mixture layer is low, when using a second conductive material that exhibits RBM peak and G-band splitting, a sufficient conductive path is formed, but pores within the electrode are reduced due to excellent dispersibility, and it was confirmed that the performance was slightly inferior to Example 1 in which the first conductive material without RBM peak and G-band splitting was applied.

On the other hand, in Comparative Examples 1 and 2, by placing the carbon-coated silicon-based active material, which has inferior lifespan characteristics compared to the Mg-doped silicon-based active material, in the second anode mixture layer, it was confirmed that room temperature and rapid charging characteristics were inferior to Examples 1 and 2, and high temperature lifespan characteristics were slightly inferior to Example 1, due to the carbon-coated silicon-based active material characteristics.

In addition, in Comparative Examples 3 and 4, as the first anode mixture layer includes a first conductive material that exhibits an RBM peak and G-band splitting, and the second anode mixture layer includes a second conductive material without RBM peaks and G-band splitting, it was found that lifespan characteristics and fast charging characteristics and the like were inferior to the examples.

Considering this, when the properties of the silicon-based active material, conductive material, and the like are appropriately adjusted differently in consideration of the properties required for respective upper and lower layers in an anode of a multilayer structure as in Examples 1 and 2, a high-capacity anode for secondary batteries with excellent room-temperature lifespan characteristics, high-temperature lifespan characteristics, and fast charging characteristics may be provided.

As set forth above, according to an embodiment, an influence of volume expansion/contraction of a silicon-based active material during battery charging/discharging may be alleviated.

According to an embodiment, a high-capacity anode for a secondary battery with excellent high-temperature lifespan characteristics may be provided.

According to an embodiment, a high-capacity anode for secondary batteries with excellent rapid charging performance may be provided.

According to an embodiment, electrolyte consumption may be reduced.

Only specific examples of implementations of certain embodiments are described. Variations, improvements and enhancements of the disclosed embodiments and other embodiments may be made based on the disclosure of this patent document.

**Claims**

1. An anode for a secondary battery comprising:

   an anode current collector;
   a first anode mixture layer on at least one surface of the anode current collector; and
   a second anode mixture layer on the first anode mixture layer,
   wherein the first anode mixture layer includes a first silicon-based active material having a carbon coating layer formed on a surface, and a first conductive material,
   the second anode mixture layer includes a second silicon-based active material doped with a metal, and a second conductive material, and
   the anode for a secondary battery exhibits a Radial Breathing Mode (RBM) peak in a Raman spectrum obtained from a surface of the second anode mixture layer.

2. The anode of claim 1, wherein the anode for the secondary battery exhibits G-band splitting in the Raman spectrum obtained from the surface of the second anode mixture layer.

3. The anode of claim 1 or 2, wherein the metal is at least one selected from lithium (Li), magnesium (Mg), calcium (Ca), iron (Fe), titanium (Ti), vanadium (V), or aluminum (Al).

4. The anode of any one of claims 1 to 3, wherein a content of the first silicon-based active material included in the first anode mixture layer is less than or equal to a content of the second silicon-based active material included in the second anode mixture layer.

5. The anode of any one of claims 1 to 4, wherein the content of the first silicon-based active material included in the first anode mixture layer is 0.1 to 5% by weight.

6. The anode of any one of claims 1 to 5, wherein the content of the second silicon-based active material included in the second anode mixture layer is 5 to 30% by weight.

7. The anode of any one of claims 1 to 6, wherein the first conductive material is any one selected from artificial graphite, natural graphite, graphene, carbon black, Super P, hard carbon, and combinations thereof.

8. The anode of any one of claims 1 to 7, wherein the second conductive material is any one selected from multi-walled carbon nanotubes (MWCNT), single-walled carbon nanotubes (SWCNT), thin-walled carbon nanotubes (TWCNT), and combinations thereof.

9. The anode of any one of claims 1 to 8, wherein a particle size (D50) of the first conductive material is 1 to 10 um.

10. The anode of any one of claims 1 to 9, wherein a length of the second conductive material is 5 to 100 um.

11. The anode of any one of claims 1 to 10, wherein a content of the first conductive material included in the first anode mixture layer is greater than or equal to a content of the second conductive material included in the second anode mixture layer.

12. The anode of any one of claims 1 to 11, wherein the content of the first conductive material included in the first anode mixture layer is 0.3 to 5% by weight.

13. The anode of any one of claims 1 to 12, wherein the content of the second conductive material included in the second anode mixture layer is 0.01 to 0.3% by weight.

14. A lithium secondary battery comprising the anode for a secondary battery according to any one of claims 1 to 13.

<u>100</u>

FIG. 1

FIG. 2A

FIG. 2B

FIG. 3A

EP 4 418 347 A1

FIG. 3B

FIG. 3C

Raman Shift

Count

FIG. 4

EP 4 418 347 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 491 619 B1 (SK ON CO LTD [KR]) 20 January 2023 (2023-01-20) | 1-4,6-8, 11,13,14 | INV. H01M4/133 |
| Y | * claims 1-17 * | 1-8,11, 12,14 | H01M4/134 H01M4/36 |
| | & US 2024/047651 A1 (JANG HWAN HO [KR] ET AL) 8 February 2024 (2024-02-08) * claims 1-18 * * paragraph [0142] - paragraph [0146] * * paragraph [0129] - paragraph [0131] * * paragraph [0052] - paragraph [0054] * * paragraph [0076] * ----- | | H01M4/38 H01M4/587 H01M4/62 H01M10/0525 |
| Y | EP 4 064 383 A1 (SK INNOVATION CO LTD [KR]) 28 September 2022 (2022-09-28) * claims 1-14 * * examples 1-4; table 1 * * paragraph [0105] * * paragraph [0069] * * paragraph [0041] * ----- | 1-8,11, 12,14 | |
| X,P | WO 2023/090847 A1 (LG ENERGY SOLUTION LTD [KR]) 25 May 2023 (2023-05-25) * claims 1-14 * * paragraph [0174] - paragraph [0190] * ----- | 1-4,6,8, 11-14 | TECHNICAL FIELDS SEARCHED (IPC) H01M |
| A | US 2022/123289 A1 (BAE JI HEE [KR] ET AL) 21 April 2022 (2022-04-21) * claims 1-10 * ----- | 1-14 | |
| A | EP 3 930 046 A1 (SAMSUNG SDI CO LTD [KR]) 29 December 2021 (2021-12-29) * claims 1-9 * * paragraph [0083] - paragraph [0084]; claims 1-9 * ----- | 1-14 | |
| A | US 2023/016746 A1 (JUN CHAN SOO [KR] ET AL) 19 January 2023 (2023-01-19) * paragraph [0204] - paragraph [0214]; claims 1-16 * ----- | 1-14 | |

The present search report has been drawn up for all claims

| Place of search | Date of completion of the search | Examiner |
|---|---|---|
| The Hague | 8 July 2024 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 6959

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2024

| Patent document cited in search report | | Publication date | Patent family member(s) | | Publication date |
|---|---|---|---|---|---|
| KR 102491619 | B1 | 20-01-2023 | CN | 116632161 A | 22-08-2023 |
| | | | EP | 4328994 A1 | 28-02-2024 |
| | | | KR | 102491619 B1 | 20-01-2023 |
| | | | KR | 20240015002 A | 02-02-2024 |
| | | | US | 2024030409 A1 | 25-01-2024 |
| | | | US | 2024047651 A1 | 08-02-2024 |
| EP 4064383 | A1 | 28-09-2022 | CN | 115132969 A | 30-09-2022 |
| | | | CN | 117334839 A | 02-01-2024 |
| | | | EP | 4064383 A1 | 28-09-2022 |
| | | | EP | 4220752 A2 | 02-08-2023 |
| | | | KR | 20220133624 A | 05-10-2022 |
| | | | KR | 20230127948 A | 01-09-2023 |
| | | | US | 2022310991 A1 | 29-09-2022 |
| WO 2023090847 | A1 | 25-05-2023 | CN | 118216015 A | 18-06-2024 |
| | | | KR | 20230071384 A | 23-05-2023 |
| | | | WO | 2023090847 A1 | 25-05-2023 |
| US 2022123289 | A1 | 21-04-2022 | CN | 114373889 A | 19-04-2022 |
| | | | DE | 102021126672 A1 | 21-04-2022 |
| | | | KR | 20220049997 A | 22-04-2022 |
| | | | KR | 20230109122 A | 19-07-2023 |
| | | | US | 2022123289 A1 | 21-04-2022 |
| EP 3930046 | A1 | 29-12-2021 | CN | 113851611 A | 28-12-2021 |
| | | | EP | 3930046 A1 | 29-12-2021 |
| | | | JP | 2022008268 A | 13-01-2022 |
| | | | US | 2021408551 A1 | 30-12-2021 |
| US 2023016746 | A1 | 19-01-2023 | CA | 3210743 A1 | 12-01-2023 |
| | | | EP | 4287320 A1 | 06-12-2023 |
| | | | JP | 2024505728 A | 07-02-2024 |
| | | | KR | 20230010172 A | 18-01-2023 |
| | | | US | 2023016746 A1 | 19-01-2023 |
| | | | WO | 2023282684 A1 | 12-01-2023 |

EPO FORM P0459

For more details about this annex : see Official Journal of the European Patent Office, No. 12/82